Europäisches Patentamt

European Patent Office

Office européen des brevets

(19)

(11) Numéro de publication : **0 454 535 B1**

# (12) FASCICULE DE BREVET EUROPEEN

(45) Date de publication du fascicule du brevet :
**21.06.95 Bulletin 95/25**

(51) Int. Cl.$^6$ : **G06F 15/80,** G06K 9/66

(21) Numéro de dépôt : **91400997.2**

(22) Date de dépôt : **16.04.91**

(54) **Système neuronal de classification et procédé de classification utilisant un tel système.**

(30) Priorité : **24.04.90 FR 9005193**

(43) Date de publication de la demande :
**30.10.91 Bulletin 91/44**

(45) Mention de la délivrance du brevet :
**21.06.95 Bulletin 95/25**

(84) Etats contractants désignés :
**DE GB NL**

(56) Documents cités :
**EP-A- 0 362 840**
**EP-A- 0 396 171**
**IJCNN INTERNATIONAL JOINT CONFE-**
**RENCE ON NEURAL NETWORKS, Washing-**
**ton, juin 1989, pages I/251-258; T. MATSUOKA**
**et al.: "Syllable recognition using inegrated**
**neural network"**
**IDEMPROCEEDINGS VLSI AND COMPUTER**
**PERIPHERALS, COMPEURO'89, Hamburg, mai**
**1989, pages 3/170-172, IEEE, New York, US;**
**N.K. HASAN et al.: "Orientation measurement**
**of piece parts using single-layer networks"**

(56) Documents cités :
**NEURO-NIMES 89, Nimes, 13-16 novembre**
**1989, pages 279-292; P.-P. MEILER:"Garbled**
**text spring recognition with a spatio-temporal**
**pattern recognition (SPR) neural network"**
**IEEE FIRST INTERNATIONAL CONFERENCE**
**ON NEURAL NETWORKS, San Diego, CA,**
**21-24 juin 1987, pages IV-417-426; R.P. LIPP-**
**MANN et al.: "Neural-net classifiers useful for**
**speech recognition"**

(73) Titulaire : **THOMSON-CSF**
**173, Boulevard Haussmann**
**F-75008 Paris (FR)**

(72) Inventeur : **Refregier, Philippe**
**THOMSON-CSF,**
**SCPI,**
**CEDEX 67**
**F-92045 Paris la Defense (FR)**
Inventeur : **Vallet, François**
**THOMSON-CSF,**
**SCPI,**
**CEDEX 67**
**F-92045 Paris la Defense (FR)**

(74) Mandataire : **Guérin, Michel et al**
**THOMSON-CSF**
**SCPI**
**B.P. 329**
**50, rue Jean-Pierre Timbaud**
**F-92402 Courbevoie Cédex (FR)**

## Description

La présente invention concerne un système neuronal de classification et un procédé de classification utilisant un tel système.

Les réseaux neuronaux désignent dans le domaine de l'intelligence artificielle des techniques, inspirées du fonctionnement du cerveau, pour résoudre des problèmes de reconnaissance, de classification ou d'optimisation, et dans le domaine des circuits électroniques ou optiques, un certain type de circuits capables de réaliser des transformations sur des vecteurs ayant un nombre élevé de composantes.

Pour classifier des objets, représentés par des signaux électriques et plus précisément par des vecteurs de signaux appliqués à l'entrée de réseaux neuronaux, il est connu de mettre en oeuvre une phase dite phase d'apprentissage. De manière générale, cette phase consiste à configurer (c'est-à-dire à programmer) un réseau appelé aussi classifieur, qui réalise une fonction effectuant au mieux la classification envisagée en utilisant un ensemble de signaux, appelé base d'apprentissage, dont on connaît pour chacun l'appartenance à l'une des classes en lesquelles on veut les classifier. Cette méthode est connue sous le nom d'apprentissage supervisé ou avec professeur.

Plusieurs méthodes de codage des classes à reconnaître sur des cellules de sortie d'un système neuronal (ou de classification) sont possibles. Une méthode largement utilisée consiste à attribuer une classe à chacune des cellules de sortie du système. La classe qui sera attribuée à l'objet présenté en régime de classification sera celle correspondant à la cellule présentant la sortie la plus grande (règle du max). Cette méthode est très attractive par sa simplicité et l'aspect intuitif qui lui est lié (règle du max). Cependant, elle peut présenter des limitations importantes : ce type de codage peut augmenter la complexité du problème à résoudre.

Ce type de codage peut conduire à un problème non linéairement séparable (du type de la fonction OU-exclusif XOR) alors qu'une solution du type linéairement séparable pourrait exister.

Le temps de convergence, durant l'apprentissage, d'un algorithme de classification (par exemple l'algorithme de rétropropagation du gradient pour l'architecture neuronale la plus utilisée) est fonction de la complexité du problème : par exemple pour un problème linéairement séparable il peut n'être que d'une dizaine d'itérations tandis qu'une centaine d'itérations sont en moyenne nécessaires pour l'apprentissage de la fonction logique XOR. Ceci souligne l'importance du codage des cellules de sortie du système neuronal ou de classification pour l'apprentissage.

Néanmoins, si un codage performant est utilisé pour l'apprentissage, en phase de reconnaissance ou de classement il est souvent intéressant de pouvoir appliquer la règle du max qui permet notamment d'interpréter les sorties comme des probabilités d'appartenance de l'objet analysé à une des classes.

On peut noter en outre que plus la tâche à résoudre par le système neuronal ou de classification est difficile, plus la structure du système risque d'être complexe. Ce point est important en particulier pour la réalisation matérielle d'un système neuronal ou de classification. En effet, par exemple pour les systèmes neuronaux, la difficulté de leur implantation parallèle réside dans le nombre d'interconnexions entre neurones. Avec la technologie classique actuelle une incompatibilité existe entre rapidité et nombre d'interconnexions (voir "DARPA Neural Network Study", AFCEA International Press, Février 1988). Les projections à court et moyen terme prédisent que des composants possédant des puissances de l'ordre de $10^9$ opérations/seconde ne dépasseront probablement pas un taux de connexions supérieur à $10^6$ interconnexions. Un objectif intéressant est donc la simplification de l'architecture des systèmes neuronaux ou de classification, et plus précisément la réduction du nombre de cellules devant être totalement interconnectées.

Le document "syllable recognition using integrated neural network", IJCN INTERNATIONAL JOINT CONFERENCE ON NEURAL NETWORKS, Washington, juin 1989, pages I/251-258 ; T. MATSUOKA et al., décrit un système neuronal de classification complexe (1 parmi N) comportant P réseaux de classification simples, susceptibles chacun de subir un apprentissage individuel, chacun des P réseaux fournissant une information et classification simple (parmi 2 ou 3). Le système neuronal comprend toutefois un réseau neuronal supplémentaire complexe qui lui établit une classification parmi un groupe de classes possibles, et qui doit subir un apprentissage.

La présente invention propose une solution au problème du choix du codage de l'information en sortie du réseau neuronal, qui permet d'utiliser la classification par la règle du max.

L'invention, est définie dans la revendication 1.

On utilise donc un système neuronal destiné à la classification d'objets parmi N classes, ce système étant constitué par P réseaux neuronaux distincts capables de fournir chacun un résultat de classification parmi n classes, n étant inférieur à N, les P réseaux neuronaux étant aptes à subir des phases d'apprentissage respectives individuelles, et un module de traitement de signal étant connecté aux P réseaux neuronaux en phase de reconnaissance d'objets après apprentissage, pour fournir, à partir des sorties des P réseaux neuronaux, N sorties de résultats de classification parmi N.

Autrement dit, on constitue P réseaux relativement simples (classification parmi n où n est petit et de préférence égal à 2), ces réseaux étant donc rapides, faciles à réaliser avec les technologies actuelles, et aptes à subir des phases d'apprentissage simples.

L'apprentissage se fait sur la classification parmi n, et lorsqu'on passe en phase opératoire, pour une classification d'objets inconnus, c'est un module de traitement de signal, connecté en sortie des P réseaux, qui effectue la détermination des résultats de classification parmi N en partant des résultats de classification parmi n.

Le module de traitement est de préférence constitué d'une manière simple à l'aide de circuits effectuant des combinaisons linéaires (essentiellement des sommes et différences) de ses entrées, et de circuits effectuant une fonction de normalisation non linéaire à partir des combinaisons linéaires obtenues, cette fonction de normalisation fournissant N sorties dont la somme est constante et qui représentent ou peuvent être interprétées chacune comme une probabilité d'appartenance à une classe respective parmi N.

Dans un exemple de réalisation préféré, les P réseaux neuronaux effectuent des classifications parmi deux classes ( tout objet devant nécessairement être classé dans l'une des deux classes); il y a suffisamment de réseaux individuels pour que toutes les N classes soient représentées dans ces classifications élémentaires. Le nombre P est donc compris entre N-1 (c'est le minimum) et N(N-1)/2 (c'est le maximum au delà duquel il y aurait redondance dans les P réseaux).

Dans un mode de réalisation préférentiel, les P réseaux neuronaux comportent des neurones de sortie constitués chacun par un circuit assurant une fonction de sommation pondérée suivie d'un circuit assurant une fonction non linéaire saturante (constitution classique d'un neurone), et le module de traitement reçoit sur ses entrées les sorties des fonctions de sommation pondérée plutôt que les sorties des neurones après les fonctions saturantes.

De préférence, la fonction non linéaire saturante en sortie des P réseaux est une fonction sigmoïde (de la forme $e^x/(1+e^x)$), et de préférence les combinaisons linéaires sont de la forme $g_i(X) = g_j(X) + f_{i,j}(X)$, où $g_i(X)$ est une combinaison linéaire d'indice i, $g_j(X)$ est une autre combinaison linéaire d'indice j, et $f_{i,j}(X)$ est la sortie de sommation pondérée (avant fonction saturante) d'un réseau neuronal de classification d'objets parmi deux classes d'indices i et j respectivement.

Enfin, de préférence, la fonction de normalisation non linéaire en sortie du module de traitement est de la forme

$P_i(X) = e^{g_i(X)}/[$somme des $e^{g_i(X)}$ , pour i = 1 à N] et c'est cette valeur $P_i(X)$ qui représente une probabilité d'appartenance de l'objet X à la $i^{ème}$ classe parmi N. Cette valeur peut évidemment être traitée par la règle du max pour fournir la classe d'appartenance.

En résumé, l'invention propose une solution au problème du choix du codage de l'information en sortie du réseau neuronal, qui permet d'utiliser la classification par la règle du max. Elle simplifie la tâche de classification lors de l'apprentissage en réduisant le problème de classification à N classes en problèmes de classification à petit nombre de classes donc plus simples.

L'invention permet de :
- simplifier la réalisation matérielle des réseaux neuronaux ou des systèmes de classification,
- faciliter la parallélisation des algorithmes pour leur implantation sur des ordinateurs parallèles à mémoire distribuée, ou sur des machines (ou des sites) physiquement différents,
- accélérer la convergence des algorithmes d'apprentissage par simplification de la tâche à résoudre,
- rajouter une nouvelle classe sans nécessiter un réapprentissage total.

La présente demande de brevet a également pour objet un procédé de classification par un système neuronal tel que défini ci dessus, à P réseaux indépendants permettant chacun une classification parmi un petit nombre n de classes, caractérisé en ce que :
- on effectue une phase d'apprentissage pour configurer chacun des P réseaux neuronaux à partir de vecteurs d'entrée et de résultats de classification désirés dans les groupes de n classes, sans utiliser le module de traitement,
- on effectue les phases opératoires après apprentissage en utilisant le module de traitement pour obtenir les résultats de classification parmi N classes à partir de la reconnaissance effectuée par les P réseaux.

L'invention sera mieux comprise et d'autres avantages apparaîtront grâce à la description qui va suivre, donnée à titre non limitatif, accompagnée des dessins annexés parmi lesquels :
- la figure 1 représente la structure classique d'un neurone,
- la figure 2 représente un graphe symbolique expliquant la condition permettant de déduire des fonctions de potentiel $g_i(X)$ aux noeuds du graphe à partir d'interactions $f_{i,j}$ (X) entre les noeuds du graphe;
- la figure 3 représente un schéma d'un mode de réalisation préféré d'un système neuronal selon l'invention,
- la figure 4 représente une réalisation possible d'un module de traitement connecté en sortie du système neuronal.

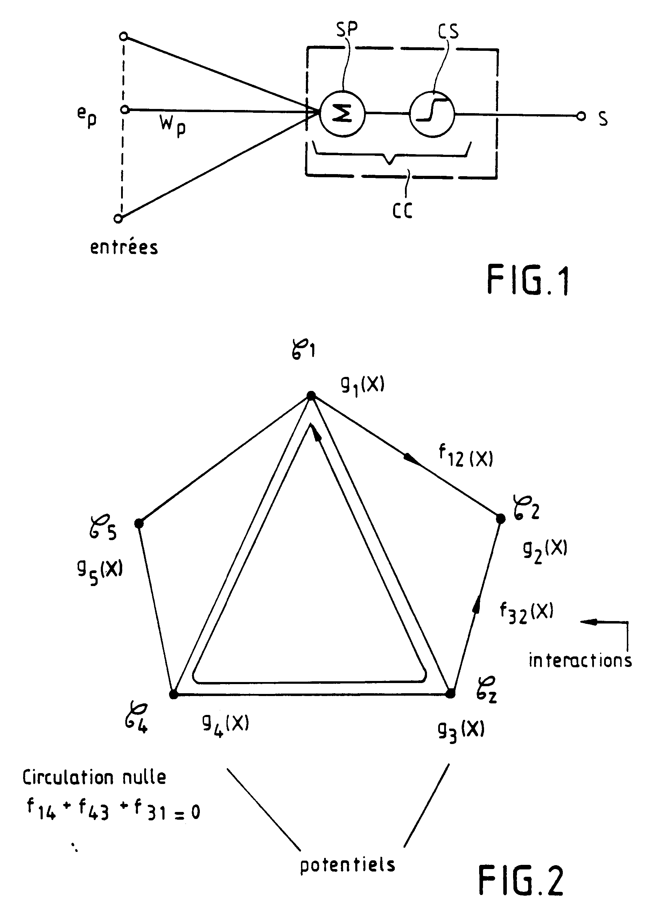

La figure 1 représente une structure classique d'un neurone comportant un certain nombre d'entrées $e_p$, une cellule de calcul CC et une sortie S. La cellule de calcul CC est formée d'un sommateur pondéré SP suivi d'un circuit à seuil CS (fonction de seuil franc ou plus souvent fonction non linéaire à saturation progressive). $W_p$ est la valeur du poids reliant la p-ième entrée $e_p$ à la cellule de calcul.

Les réseaux de neurones peuvent être généralement agencés en couches de neurones. Toutes les sorties des neurones d'une même couche pouvant être reliées à tous les neurones des couches suivantes, le nombre d'interconnexions peut être extrêmement élevé dès que le problème à résoudre est complexe; en particulier, pour un problème de reconnaissance dans lequel les vecteurs d'entrée comportent un nombre important de paramètres et dans lequel le nombre de classes à reconnaître est élevé, le réseau neuronal sera très complexe; il en découlera des difficultés de réalisation et une lenteur de fonctionnement et d'apprentissage.

Un but de l'invention est de réduire la complexité du système neuronal.

L'invention part de la remarque qu'il est possible dans certains cas (c'est-à-dire en respectant certaines conditions), de déduire la classification d'objets parmi N classes à partir de plusieurs classifications de ces mêmes objets parmi des classes prises deux à deux (ou plus généralement à partir de classifications parmi n où n est plus petit que N). Pour le montrer, on se limitera au cas où n=2, mais le principe est généralisable à des cas où n est différent de deux; l'invention n'aura en général d'intérêt pratique que si n est largement inférieur à N.

Bien entendu, la première condition minimale à respecter est que la classification des objets dans des couples de deux classes fasse intervenir toutes les N classes. Si on oublie certaines classes, on n'a aucune chance de pouvoir déduire une classification 1 parmi N. Une manière simple de respecter cette condition est par exemple de faire N-1 classifications à deux classes : classification entre classes $C_1$ et $C_2$, entre $C_2$ et $C_3$, etc ..., et enfin entre $C_{N-1}$ et $C_N$. D'autres solutions sont possibles, telles que par exemple des classifications $C_1/C_2$, $C_1/C_3$, etc..., ou d'autres encore, pouvant éventuellement faire intervenir un nombre de classes P supérieur à N-1, et jusqu'à N(N-1)/2.

La deuxième condition à respecter, qui permet d'établir les bases de la présente invention, est la suivante : si on veut qu'à partir d'une fonction $f_{i,j}(X)$ faisant intervenir deux indices i,j on puisse définir des fonctions $g_i(X)$ ne faisant intervenir qu'un seul indice i, il faut qu'on puisse établir un graphe tel que celui de la figure 2, dans lequel les $f_{i,j}(X)$ représentent en quelque sorte des "interactions" entre noeuds du graphe alors que les $g_i(X)$ représentent des "potentiels" des noeuds du graphe. Et il faut que les circulations de ces "interactions" le long des boucles fermées du graphe soient nulles. En effet, c'est alors qu'on pourra déduire n'importe quel potentiel $g_i$ à partir d'un potentiel $g_j$ et de "l'interaction" $f_{i,j}$. Dans le cas le plus simple qu'on puisse imaginer, les interactions se contentent de représenter la "différence de potentiel" algébrique entre deux noeuds, c'est-à-dire qu'on déduira un potentiel $g_i$ d'un potentiel $g_j$ voisin par la formule très simple $g_i - g_j = f_{i,j}$.

Cela revient à dire que pour permettre la déduction des fonctions $g_i(X)$ à partir des $f_{i,j}(X)$ il faut pouvoir exprimer la fonction $f_{i,j}(X)$, qui fait intervenir deux indices i et j, sous forme d une différence $g_i(X) - g_j(X)$ de fonctions ne faisant intervenir chacune que l'indice i ou l'indice j mais pas les deux.

On peut appliquer ce concept simple à un problème de classification de type probabiliste dans lequel on cherche des "probabilités" $P_i(X)$ qu'un objet X appartienne à la classe $C_i$ parmi N classes $C_1$ à $C_N$ alors qu'on ne connaît que les probabilités $P_{i,j}(X)$ que l'objet appartienne à la classe $C_i$ parmi deux classes possibles $C_i$ et $C_j$ seulement.

On remarque d'abord que l'approche probabiliste permet d'écrire, en utilisant les règles de Bayes, l'égalité suivante :

$$(1) \qquad P_{i,j}(X) = P_i(X)/[P_i(X) + P_j(X)]$$

Autrement dit, la probabilité pour que l'objet X appartienne à la classe $C_i$ s'il n'y a que deux possibilités de classement $C_i$ et $C_j$ est liée directement aux probabilités pour que l'objet X appartienne à la classe $C_i$ ou à la classe $C_j$ lorsqu'il y a N classes possibles.

On écrit de la même manière :

$$(2) \qquad P_{j,i}(X) = P_j(X)/[(P_i(X) + P_j(X)]$$

pour la probabilité d'appartenance à la classe $C_j$ parmi les deux seules classes possibles $C_i$ et $C_j$.
D'où il résulte que

$$(3) \qquad P_{i,j}(X)/P_{j,i}(X) = P_i(X)/P_j(X)$$

et par conséquent

$$(4) : \qquad \log[P_{i,j}(X)] - \log[P_{j,i}(X)] = \log[P_i(X)] - \log[P_j(X)]$$

Il y a donc des relations simples entre les probabilités d'appartenance à une classe parmi 2 et les probabilités d'appartenance à une classe parmi N, et ces relations peuvent s'exprimer sous formes de simples différences (de logarithmes).

Selon l'invention, on propose la démarche suivante :

- on établit par P réseaux neuronaux distincts relativement simples (classification sur deux classes chacun) des résultats de classification pouvant être interprétés comme des probabilités $P_{i,j}(X)$ qui d'une part sont comprises entre 0 et 1 (comme toute probabilité) et d'autre part sont telles que $P_{i,j}(X)$ soit égal à 1 - $P_{j,i}(X)$; ces deux conditions expriment tout simplement que $P_{i,j}$ est le résultat de type probabiliste d'une classification des objets X parmi deux classes, l'objet appartenant obligatoirement à l'une des deux classes; il y a P réseaux neuronaux distincts, et P est compris entre N-1 et N(N-1)/2; les P réseaux font obligatoirement intervenir toutes les classes $C_1$ à $C_N$.

$$(5) \qquad P_{i,j}(X) = 1 - P_{j,i}(X)$$

(qui se déduit d'ailleurs de (1) et (2))

- on définit alors, à partir de ces probabilités $P_{i,j}(X)$, des fonctions $f_{i,j}(X)$ qui elles-mêmes pourront s'exprimer sous forme d'une différen-

ce $g_i(X) - g_j(X)$; on choisit de préférence comme fonction $f_{i,j}(X)$ la fonction

(6) $\qquad f_{i,j}(X) = \log(P_{i,j}(X)) - \log(1 - P_{i,j}(X))$

qui d'une part s'obtient très facilement à partir de $P_{i,j}(X)$ et qui d'autre part n'est pas autre chose que

(7) $\qquad f_{i,j}(X) = \log(P_{i,j}(X)) - \log(P_{j,i}(X))$

(puisque $P_{i,j} + P_{j,i} = 1$)

$f_{i,j}(X)$ peut alors s'écrire, d'après (4) :

(8) $\qquad f_{i,j}(X) = \log(P_i(X)) - \log(P_j(X))$

ce qui s'exprime bien sous une forme de différence $g_i - g_j$ en écrivant tout simplement

(9) $\qquad g_i(X) = \log(P_i(X)) + H(X)$

où $H(X)$ est une fonction indépendante de l'indice i et nécessaire pour la normalisation des $P_i(X)$.

- ensuite, puisque les probabilités $P_{i,j}$ sont fournies par les P réseaux et puisque l'on peut facilement connaître les fonctions $f_{i,j}$ à partir des probabilités $P_{i,j}$ (équation (6)), il ne reste plus qu'à déduire les $g_i(X)$ par simple circulation le long des boucles fermées du graphe de la figure 2 : on se fixe un potentiel de départ quelconque (la référence est arbitraire), par exemple $g_1(X) = K$; on en déduit les autres par des combinaisons linéaires du genre $g_i(X) = g_1(X) + f_{i,1}(X)$ si $f_{i,1}(X)$ est fourni par un des P réseaux neuronaux, ou d'autres combinaisons linéaires correspondant aux circulations le long des boucles fermées du graphe de la figure 2 et utilisant celles des valeurs $f_{i,1}$ qu'on a obtenu à partir des P réseaux neuronaux de classification par deux.

- enfin, ayant les valeurs $g_i(X)$, il ne reste plus qu'à les reconvertir en probabilités $P_i(X)$ puisque

$\qquad g_i(X) = \log(P_i(X)) + H(X)$

on calcule donc $P_i(X)$ par la formule

(10) $\qquad P_i(X) = e^{g_i(X) - H(X)}$

- cependant, comme on veut que les résultats probabilistes $P_i(X)$ soient bien des probabilités d'appartenance à une classe parmi N dans laquelle la somme des probabilités d'appartenance à toutes les classes est égale à l'unité, on choisira de normaliser la fonction $P_i(X)$ en l'écrivant plutôt sous la forme

(11) : $\qquad P_i(X) = e^{g_i(X)}/[\text{somme des } e^{g_i(X)} , \text{ pour } i = 1 \text{ à N}]$

ce qui revient tout simplement à identifier a posteriori la fonction $H(X)$.

On voit par conséquent qu'il peut exister un moyen simple de simplifier des réseaux neuronaux de classification lorsque le problème de classification est complexe et risque d'aboutir à des réseaux ayant un nombre d'interconnexions beaucoup trop élevé : on réalise plutôt un ensemble de P réseaux neuronaux élémentaires distincts recevant tous les mêmes vecteurs d'entrée représentant les objets X à classer et fournissant des résultats de type probabiliste de classifications parmi deux classes; ce sont des réseaux simples, donc rapides et d'apprentissage facile; on fait l'apprentissage sur ces réseaux, à partir de résultats de classification désirés dans les groupes de 2 classes. Puis, quand l'apprentissage est terminé et que le réseau passe à sa fonction normale de reconnaissance et classification, on utilise les résultats probabilistes $P_{i,j}(X)$ des classifications sur deux classes pour les transmettre à un module électronique de traitement qui calcule les valeurs $P_i(X)$ des probabilités d'appartenance à une classe parmi les N classes. Le calcul est fait par l'intermédiaire des fonctions $f_{i,j}(X)$ qui sont liées à $P_{i,j}(X)$ et des fonctions $g_i(X)$ qui sont liées à $f_{i,j}(X)$. Il ne reste ensuite qu'à utiliser les sorties de ce module pour déterminer la classification, par exemple en utilisant la règle classique du max : la classe est celle qui correspond à la sortie $P_i(X)$ la plus élevée parmi les N sorties du module.

Cette démarche est généralisable pour le cas où n est différent de deux, à condition qu'on puisse établir, au moins d'une manière approchée, une règle de passage des probabilités d'appartenance à une classe parmi n aux probabilités d'appartenance à une classe parmi N.

La fonction intermédiaire $f_{i,j}$ qu'on a choisie de préférence et qui est

$\qquad f_{i,j}(X) = \log(P_{i,j}(X)) - \log(1 - P_{i,j}(X))$

est particulièrement intéressante car elle revient à dire que la probabilité $P_{i,j}(X)$ est une fonction sigmoïde de $f_{i,j}(X)$:

(12) $\qquad P_{i,j}(X) = e^{f_{i,j}(X)}/[1 + e^{f_{i,j}(X)}]$

Or, bien souvent, les neurones de sortie des réseaux neuronaux utilisent comme fonction non linéaire saturante des fonctions sigmoïdes de ce type pour établir, à partir d'une somme pondérée S un résultat de classification de type probabiliste : la sortie probabiliste Z (après fonction non linéaire saturante) en fonction de la somme pondérée Y établie par le neurone (avant fonction non linéaire saturante) est le type

$\qquad Z = e^Y/(1 + e^Y)$

Cela revient à dire qu'une manière très simple d'obtenir les fonctions $f_{i,j}(X)$ à partir des probabilités $P_{i,j}(X)$ est

- de constituer les P réseaux neuronaux élémentaires avec des neurones de sortie dans lesquels la fonction non linéaire saturante est une fonction sigmoïde, ces neurones de sortie fournissant les probabilités $P_{i,j}(X)$,

- et de prendre alors comme valeur $f_{i,j}(X)$ la sortie du même neurone <u>avant</u> la fonction non linéaire saturante qui établit les $P_{i,j}(X)$. Cette sortie sera alors justement une valeur $f_{i,j}(X)$ égale à la différence des logarithmes de $P_{i,j}(X)$ et de $1 - P_{i,j}(X)$ comme on le souhaite d'après l'équation (6).

Cela évite d'avoir à réaliser un circuit de traitement spécifique pour établir à partir des $P_{i,j}(X)$ les fonctions $f_{i,j}(X)$ avant d'appliquer ces fonctions $f_{i,j}(X)$ aux entrées du module de traitement qui calcule les $g_i(X)$ puis les $P_i(X)$.

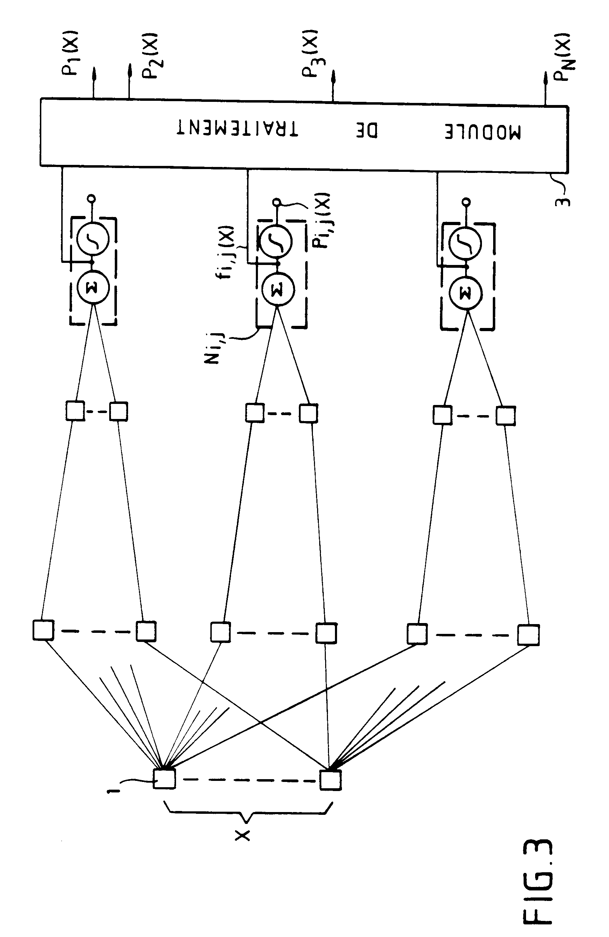

On aboutit alors au mode de réalisation préférentiel de l'invention qui est représenté à la figure 3.

Dans la figure 3, les neurones ont été à titre d'exemple représentés sur quatre couches et sont figurés sous la forme de petits carrés tels que celui représenté sous la référence 1. Concernant les neurones de la dernière couche, on a distingué les circuits sommateurs SP des circuits à seuil CS et on suppose que la fonction de seuil est une fonction sigmoïde du type $e^x/(1 + e^x)$.

Il y a P réseaux neuronaux distincts recevant tous les mêmes vecteurs d'entrée. Par vecteur d'entrée on entend un ensemble de signaux à traiter par le réseau neuronal, cet ensemble représentant l'objet X à classer. Chaque réseau neuronal comporte un neurone de sortie respectif $N_{i,j}$ fournissant

- sur la sortie du sommateur pondéré SP la fonction $f_{i,j}(X)$, et
- sur la sortie du circuit à seuil la probabilité $P_{i,j}(X)$ d'appartenance de l'objet X à une classe $C_i$ parmi deux classes $C_i$ et $C_j$. Les valeurs $P_{i,j}$ et $f_{i,j}$ sont alors liées par la relation (6).

On rappelle que si le circuit à seuil n'est pas de type sigmoïde, il faut constituer les fonctions $f_{i,j}$ à partir des $P_{i,j}$ par un circuit spécifique établissant la relation (6),

Les P sorties donnant les fonctions $f_{i,j}$ sont appliquées comme signaux d'entrée à P entrées d'un module de traitement 3 qui possède N sorties (une par classe possible). Sur ces N sorties sont établies les probabilités respectives d'appartenance de l'objet X aux différentes classes $C_1$ à $C_N$, ceci en fonction des relations liant les probabilités de classement parmi n aux probabilités de classement parmi N.

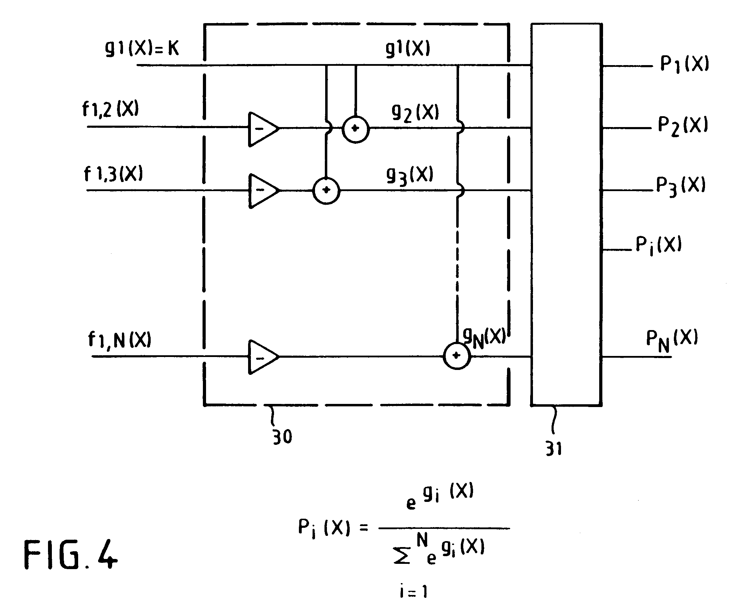

La figure 4 permet de préciser la constitution du module de traitement (3) dans le cas simple qui est décrit à titre préférentiel, avec n=2. On suppose par exemple que les P réseaux neuronaux fournissent des fonctions $f_{1,2}(X)$, $f_{1,3}(X)$, ...., $f_{1,N}(X)$ mais ils pourraient aussi fournir d'autres fonctions telles que $f_{2,3}$, etc., la seule condition étant que les fonctions fournies permettent de décrire, dans le graphe de la figure 2, suffisamment de boucles fermées pour faire intervenir touts les indices de 1 à N. Ce sont les boucles décrites qui définiront les combinaisons linéaires permettant de passer des $f_{i,j}(X)$ aux $g_i(X)$.

Dans l'exemple décrit à la figure 4, on établit une valeur arbitraire de signal (courant ou tension électrique par exemple) qui définira l'une des fonctions $g_i(X)$. Par exemple $g_1(X)$ est pris arbitrairement égal à K.

Le module comprend des circuits de sommation algébrique 30 pour établir les combinaisons linéaires suivantes à partir de $g_1$ et des $f_{1,i}$ :

$$g_i(X) = g_1(X) - f_{1,i}(X) \text{ pour tous les i.}$$

Et ensuite, à partir des combinaisons linéaires simples ainsi obtenues, le module de traitement comprend un circuit de normalisation non linéaire permettant de repasser aux probabilités $P_i(X)$ constituant les sorties du module. D'après la formule (11), on rappelle que dans le mode de réalisation préférentiel de l'invention, la fonction de normalisation non linéaire sera :

$$P_i(X) = e^{g_i(X)}/[\text{somme des } e^{g_i(X)}, \text{ pour i} = 1 \text{ à N}]$$

Elle est effectuée dans un circuit de transformation non linéaire schématisé par un bloc référencé 31 qui reçoit les différentes combinaisons linéaires $g_i(X)$ établies dans le module. Les sorties du circuit 31 sont les sorties du système neuronal selon l'invention. Elles peuvent elles-mêmes être traitées par un circuit de comparaison définissant par la règle du max quel est le résultat final d'une classification parmi N.

L'apprentissage du système neuronal de l'invention s'effectuera par apprentissage individuel de chacun des P réseaux neuronaux, la base d'apprentissage comprenant des vecteurs d'entrée et des classes désirées (en classification parmi deux classes possibles seulement) pour les objets représentés par ces vecteurs. Le module 3 n'est pas utilisé pendant cette phase. Les sorties $P_{i,j}(X)$ sont utilisées pour cette phase. Après apprentissage, en phase de reconnaissance d'objets, le module 3 est connecté aux sorties donnant les $f_{i,j}(X)$ et fournit les résultats désirés de classification parmi N.

Le choix des couples de classes $C_i$, $C_j$ définissant les tâches de chacun des P réseaux neuronaux peut être déterminé soit arbitrairement (pourvu que tous les indices 1 à N soient utilisés et qu'on puisse établir les boucles fermées désirées dans le graphe de la figure 2), soit en fonction du problème de classification précis à résoudre : il peut en effet être avantageux de faire certaines comparaisons $C_i$, $C_j$ plutôt que d'autres pour faciliter la solution du problème de classification global parmi N.

Par ailleurs, il peut se faire que les règles de choix des fonctions $f_{i,j}(X)$ et $g_i(X)$, données rigoureusement dans l'exemple simple décrit précédemment, ne soient pas faciles à mettre en oeuvre, de sorte qu'on ne sait pas parfaitement établir un graphe tel que celui de la figure 2 : les fonctions $f_{i,j}$ ne respectent pas vraiment la condition conduisant à un graphe de potentiels où la circulation des interactions le long de toute boucle fermée est nulle. Dans ce cas, il faut simplement essayer d'établir un graphe s'aprochant le plus possible d'un graphe respectant cette condition. Il existe des critères d'optimisation permettant de résoudre ce type de problème.

A titre d'exemple, on peut envisager le cas où les probabilités partielles $P_{i,j}$ sont toutes apprises indépendamment, de sorte qu'elles ne sont pas liées aux probabilités finales $P_i$ par les équations définies plus haut. On peut très bien alors utiliser le critère d'erreur quadratique pour minimiser, le long des boucles du graphe la différence quadratique entre la fonction $f_{i,j}(X)$ et la "différence de potentiel" $g_i(X) - g_j(X)$, pour établir des interactions $f_{i,j}$ se rapprochant le plus possible d'un graphe où les circulations des interactions sont nulles le long des boucles fermées.

Cette optimisation permet d'aboutir à une détermination tout-à-fait explicite ( donc réalisable par un circuit électronique) de la valeur $g_i(X)$ en fonction des valeurs $f_{i,j}(X)$. Dans un exemple d'optimisation quadratique des différences entre les interactions $f_{i,j}$ et les "différences de potentiel" $g_i - g_j$, on a trouvé qu'il fallait établir des fonctions $g_i(X)$ telles que $2Ng_i(X)$ soit la somme de toutes les différences (qui dans cette hypothèse ne sont pas nulles) $f_{i,j}(X) - f_{j,i}(X)$ pour $j = 1$ à N. Cette explication montre simplement que la démarche de l'invention s'applique (mais de manière plus complexe) même dans les cas où on ne peut déduire qu'approximativement les résultats de classification $P_l$ parmi N à partir de résultats de classification partielle $P_{i,j}$ parmi 2 ou n.

On a cité un autre avantage potentiel de ce module : la possibilité de rajouter une nouvelle classe sans nécessiter un réapprentissage total. En effet, l'ajout d'une nouvelle classe se traduit au niveau du graphe d'apprentissage par l'apparition d'un nouveau noeud. Pour reconstruire un graphe complètement connecté, il suffit de connaître une des interactions de ce noeud avec un des noeuds du graphe et de déduire l'ensemble des interactions manquantes (ou ce qui est équivalent, la valeur du potentiel de ce noeud). Cette approche correspond à l'apprentissage dans le cas d'un graphe où la circulation est bien nulle le long des boucles fermées. La deuxième approche (quand la première n'est pas possible) consiste à apprendre toutes les probabilités à deux classes entre cette nouvelle classe et les anciennes classes. Interprété sur le graphe, ceci revient à déterminer toutes les interactions entre ce nouveau noeud et les noeuds du graphe, et à appliquer la règle de détermination des potentiels $g_i(X)$ décrite précédemment. On remarquera en particulier que cette nouvelle détermination des potentiels $g_i(X)$ peut être écrite comme une perturbation par rapport aux potentiels existant auparavant.

Il faut maintenant remarquer que dans le cas général, rien ne permet d'affirmer que l'apprentissage sur les N - 1 sous-réseaux (donc par paires de classes) assure un apprentissage sans erreur sur l'ensemble d'apprentissage constitué de toutes les classes une fois ces sous -réseaux connectés comme cela est proposé ici par le module de traitement 3. Plusieurs solutions sont possibles : soit réaliser le partitionnement des N classes en P paires de classes en mettant en oeuvre des méthodes d'analyse des données, soit en réalisant un second apprentissage (apprentissage de perfectionnement) une fois les sous-réseaux connectés.

Premier cas :

Dans le premier cas on peut par exemple calculer les distances entre les centres de gravité des N classes et faire le partitionnement par paires de classes, de la façon suivante :

. (1) choisir la paire de classes les plus rapprochées l'une de l'autre et déterminer l'interconnexion sur le graphe correspondant à ce couple,

. (2) choisir la paire de classes les plus rapprochées parmi les paires de classes restantes (non-connectées sur le graphe ) et déterminer l'interconnexion sur le graphe correspondant à ce couple,

. (3) déduire les interactions $f_{i,j}$ possibles,

. (4) retourner à l'étape n° 2 si le graphe n'est pas totalement connecté, sinon : fin de la procédure.

On peut noter que les distances entre classes qui viennent d'être considérées peuvent être des distances renormalisées par les variances entre classes comme cela est généralement pratiqué dans le cadre de l'analyse de données (voir le livre "Pattern classification and scene analysis" de R. O. DUDA et P.E.J. HART, Wiley and sons, NEW-YORK, 1973).

Deuxième cas :

L'idée est ici encore plus simple et plus générale : l'apprentissage réalisé par paire de classes est considéré comme un pré-apprentissage qui détermine les valeurs initiales pour un second apprentissage (apprentissage de perfectionnement) une fois les sous - réseaux connectés. Si certains objets sont mal classés, ceci correspondra à des interactions sur le graphe qui auront été mal déterminées, et donc à des erreurs entre paires de classes non-apprises par la procédure par paires. On ne sera donc pas dans la situation générale où il faut classer un objet dans sa classe contre toutes les autres classes, mais seulement contre les classes qui ont permis ce mauvais classement. On comprend donc que le pré-apprentissage par paires doit améliorer l'apprentissage par rapport au cas général. On effectuera alors d'abord un apprentissage sans le module 3 à partir d'une base d'apprentissage faisant intervenir des résultats désirés de classifications par couples de classes (ou par groupes de n classes), puis un apprentissage complémentaire, avec le module de traitement 3 et avec une base d'apprentissage faisant intervenir des résultats désirés de classification parmi N classes.

## Revendications

1. Système neuronal destiné à la classification d'objets parmi N classes, ce système comportant P réseaux neuronaux distincts capables de fournir chacun un résultat $(P_{i,j}(X))$ de classification parmi 2 classes seulement, ce résultat pouvant être interprété comme la probabilité pour qu'un objet X appartienne à la classe $C_i$ parmi deux classes possibles $C_i$ et $C_j$, les N classes étant représentées dans les P réseaux neuronaux, et les P réseaux neuronaux étant aptes à subir des phases d'apprentissage respectives individuelles, caractérisé en ce qu'un module de traitement de signal (3) est connecté aux P réseaux neuronaux en phase de reconnaissance d'objets après apprentissage, pour fournir, à partir des résultats fournis par les P réseaux neuronaux, N sorties ($P_i$(X)) représentant des probabilités d'appartenance à chacune des N classes respectivement, en ce qu'il est prévu des moyens pour transmettre aux entrées du module des valeurs $f_{i,j}$(X) telles que

$$f_{i,j}(X) = \log(P_{i,j}(X)) - \log(1 - P_{i,j}(X))$$

le module de traitement (3) comprenant des circuits (30) établissant des combinaisons linéaires de ses entrées et des circuits (31) effectuant une fonction de normalisation non linéaire à partir des combinaisons linéaires obtenues, cette fonction de normalisation fournissant N sorties dont la somme est constante et qui peuvent être interprétées chacune comme une probabilité d'appartenance à une classe respective parmi N.

2. Système neuronal selon la revendication 1, caractérisé en ce que les combinaisons linéaires sont de la forme $g_i(X) = g_j(X) + f_{i,j}(X)$, où $g_i(X)$ est une combinaison linéaire d'indice i, $g_j(X)$ est une autre combinaison linéaire d'indice j.

3. Système neuronal selon la revendication 2, caractérisé en ce que l'une des fonctions $g_j(X)$ est une constante, les autres se déduisant des fonctions $f_{i,j}(X)$ par la formule $g_i(X) = g_j(X) + f_{i,j}(X)$.

4. Système neuronal selon l'une des revendications 2 et 3, caractérisé en ce que la fonction de normalisation non linéaire en sortie du module de traitement est de la forme : $P_i(X) = e^{g_i(X)}/[\text{somme des } e^{g_i(X)}, \text{ pour } i = 1 \text{ à } N]$.

5. Système selon l'une des revendications 1 à 4, caractérisé en ce que les P réseaux comportent des neurones de sortie ($N_{i,j}$) constitués chacun par un circuit assurant une fonction de sommation pondérée (SP) suivie d'un circuit (CS) assurant une fonction non linéaire saturante, et en ce que le module de traitement (3) reçoit sur ses entrées les sorties des fonctions de sommation pondérée.

6. Système selon la revendication 5, caractérisé en ce que la fonction non linéaire saturante des neurones de sortie des P réseaux est une fonction sigmoïde (de la forme $e^x/(1+e^x)$).

7. Système selon l'une des revendications précédentes, caractérisé en ce que les réseaux sont au nombre de P = N-1.

8. Procédé de classification d'objets par un système neuronal comportant un système neuronal destiné à la classification d'objets parmi N classes, ce système comportant P réseaux neuronaux distincts capables de fournir chacun un résultat ($P_{i,j}$(X)) de classification parmi 2 classes seulement, ce résultat pouvant être interprété comme la probabilité pour qu'un objet X appartienne à la classe $C_i$ parmi deux classes possibles $C_i$ et $C_j$, les N classes étant représentées dans les P réseaux neuronaux, et les P réseaux neuronaux étant aptes à subir des phases d'apprentissage respectives individuelles, ou un module de traitement de signal (3) est connecté aux P réseaux neuronaux en phase de reconnaissance d'objets après apprentissage, pour fournir, à partir des résultats fournis par les P réseaux neuronaux, N sorties ($P_i$(X)) représentant des probabilités d'appartenance à chacune des N classes respectivement, en ce qu'il est prévu des moyens pour transmettre aux entrées du module des valeurs $f_{i,j}$(X) telles que

$$f_{i,j}(X) = \log(P_{i,j}(X)) - \log(1 - P_{i,j}(X))$$

le module de traitement (3) comprenant des circuits (30) établissant des combinaisons linéaires de ses entrées et des circuits (31) effectuant une fonction de normalisation non linéaire à partir des combinaisons linéaires obtenues, cette fonction de normalisation fournissant N sorties dont la somme est constante et qui peuvent être interprétées chacune comme une probabilité d'appartenance à une classe respective parmi N, caractérisé en ce que :
- on effectue une phase d'apprentissage pour configurer chacun des P réseaux neuronaux à partir de vecteurs d'entrée et de résultats de classification désirés dans les groupes de 2 classes, sans utiliser le module de traitement (3),
- on effectue les phases opératoires de classification après apprentissage en utilisant le module de traitement (3) pour obtenir les résultats de classification parmi N classes à partir de la reconnaissance effectuée par les P réseaux.

9. Procédé selon la revendication 8, caractérisé en ce que la phase d'apprentissage des P réseaux est suivie d'une phase d'apprentissage supplémentaire du système, dans laquelle le module de traitement (3) est connecté, avec une base d'apprentissage faisant intervenir des résultats de classification désirés parmi N classes.

**Patentansprüche**

1. Neuronales System, das zur Klassifikation von Objekten in N Klassen bestimmt ist, wobei diese System P getrennte neuronale Netze aufweist, von denen jedes in der Lage ist, ein Klassifikationsergebnis ($P_{i,j}(X)$) in nur zwei Klassen zu liefern, wobei dieses Ergebnis als die Wahrscheinlichkeit interpretiert werden kann, daß ein Objekt X der Klasse $C_i$ von zwei möglichen Klassen $C_i$ und $C_j$ angehört, wobei die N Klassen in den P neuronalen Netzen repräsentiert sind und die P neuronalen Netze jeweils individuellen Lernphasen unterzogen werden können, dadurch gekennzeichnet, daß ein Signalverarbeitungsmodul (3) mit den P neuronalen Netzen in der Objekterkennungsphase nach der Lernphase verbunden ist, um auf Grund der von den P neuronalen Netzen gelieferten Ergebnisse N Ausgangssignale ($P_i(X)$) zu liefern, die jeweils Wahrscheinlichkeiten des Zugehörens zu jeder der N Klassen repräsentieren, und daß Mittel vorgesehen sind, um zu den Eingängen des Moduls Werte $f_{i,j}(X)$ zu übertragen, für die gilt

$$f_{i,j}(X) = \log(P_{i,j}(X)) - \log(1 - P_{i,j}(X))$$

wobei der Verarbeitungsmodul (3) Schaltungen (30) enthält, die lineare Kombinationen seiner Eingangssignale bilden, und Schaltungen (31), die auf Grund der erhaltenen linearen Kombinationen eine nichtlineare Normierungsfunktion ausführen, wobei diese Normierungsfunktion N Ausgangssignale liefert, deren Summe konstant ist und von denen jedes als eine Wahrscheinlichkeit der Zugehörigkeit zu einer von N Klassen interpretiert werden kann.

2. Neuronales System nach Anspruch 1, dadurch gekennzeichnet, daß die linearen Kombinationen von der Form $g_i(X) = g_j(X) + f_{i,j}(X)$ sind, worin $g_i(X)$ eine lineare Kombination des Index i und $g_j(X)$ eine andere lineare Kombination des Index j ist.

3. Neuronales System nach Anspruch 2, dadurch gekennzeichnet, daß eine der Funktionen $g_j(X)$ eine Konstante ist und daß sich die anderen von den Funktionen $f_{i,j}(X)$ durch die Formel $g_i(X) = g_j(X) + f_{i,j}(X)$ ableiten.

4. Neuronales System nach einem der Ansprüche 2 und 3, dadurch gekennzeichnet, daß die nichtlineare Normierungsfunktion am Ausgang des Verarbeitungsmoduls von der folgenden Form ist:

$$P_i(X) = e^{g_i(X)}/[\text{Summe der } e^{g_i(X)}, \text{ für } i = 1 \text{ bis } N].$$

5. System nach einem der Ansprüche 1 bis 4, dadurch gekennzeichnet, daß die P Netze Ausgangsneuronen ($N_{i,j}$) enthalten, von denen jedes durch eine Schaltung gebildet ist, die eine Funktion gewichteter Summierung (SP) durchführt, gefolgt von einer Schaltung (CS), die eine nichtlineare Sättigungsfunktion durchführt, und daß der Verarbeitungsmodul (3) an seinen Eingängen die Ausgangssignale der Funktionen gewichteter Summierung empfängt.

6. System nach Anspruch 5, dadurch gekennzeichnet, daß die nichtlineare Sättigungsfunktion der Ausgangsneuronen der P Netze eine sigmoide Funktion (der Form $e^x/(1+e^x)$) ist.

7. System nach einem der vorhergehenden Ansprüche, dadurch gekennzeichnet, daß die Anzahl der Netze P = N+1 ist.

8. Verfahren zur Klassifikation von Objekten durch ein neuronales System, das ein neuronales System enthält, das zur Klassifikation von Objekten in N Klassen bestimmt ist, wobei diese System P getrennte neuronale Netze aufweist, von denen jedes in der Lage ist, ein Klassifikationsergebnis ($P_{i,j}(X)$) in nur zwei Klassen zu liefern, wobei dieses Ergebnis als die Wahrscheinlichkeit interpretiert werden kann, daß ein Objekt X der Klasse $C_i$ von zwei möglichen Klassen $C_i$ und $C_j$ angehört, wobei die N Klassen in den P neuronalen Netzen repräsentiert sind und die P neuronalen Netze jeweils individuellen Lernphasen unterzogen werden können, dadurch gekennzeichnet, daß ein Signalverarbeitungsmodul (3) mit den P neuronalen Netzen in der Objekterkennungsphase nach der Lernphase verbunden ist, um auf Grund der von den P neuronalen Netzen gelieferten Ergebnisse N Ausgangssignale ($P_i(X)$) zu liefern, die jeweils Wahrscheinlichkeiten des Zugehörens zu jeder der N Klassen repräsentieren, und daß Mittel vorgesehen sind, um zu den Eingängen des Moduls Werte $f_{i,j}(X)$ zu übertragen, für die gilt

$$f_{i,j}(X) = \log(P_{i,j}(X)) - \log(1 - P_{i,j}(X))$$

wobei der Verarbeitungsmodul (3) Schaltungen (30) enthält, die lineare Kombinationen seiner Eingangssignale bilden, und Schaltungen (31), die auf Grund der erhaltenen linearen Kombinationen eine nichtlineare Normierungsfunktion ausführen, wobei diese Normierungsfunktion N Ausgangssignale liefert, deren Summe konstant ist und von denen jedes als eine Wahrscheinlichkeit der Zugehörigkeit zu einer von N Klassen interpretiert werden kann, dadurch gekennzeichnet, daß:

- eine Lernphase durchgeführt wird, um jedes der P neuronalen Netze auf Grund von Eingangsvektoren und gewünschten Klassifikationsergebnissen in den Gruppen von 2 Klassen ohne Verwendung des Verarbeitungsmoduls (3) zu konfigurieren,

- die Klassifikationsbetriebsphasen nach dem Lernen unter Verwendung des Verarbeitungsmoduls (3) durchgeführt werden, damit die Klassifikationsergebnisse in N Klassen auf Grund der von den P Netzen durchgeführten Erkennung erhalten werden.

9. Verfahren nach Anspruch 8, dadurch gekennzeichnet, daß auf die Lernphase der P Netze eine zusätzliche Lernphase des Systems folgt, in welcher der Verarbeitungsmodul (3) angeschlossen ist, mit einer Lernbasis, welche gewünschte Klassifikationsergebnisse in N Klassen eingehen läßt.

**Claims**

1. Neural system intended for classifying objects among N classes, this system including P distinct neural networks each capable of supplying a classification result ($P_{i,j}(X)$) among only 2 classes, this result being able to be interpreted as the probability that an object X belongs to the class $C_i$ among two possible classes $C_i$ and $C_j$, the N classes being represented in the P neural networks, and the P neural networks being able to undergo individual respective learning phases, characterized in that a signal processing module (3) is connected to the P neural networks in object-recognition phase after learning, in order, from the results supplied by the P neural networks, to supply N outputs ($P_l(X)$) representing probabilities of belonging to each of the N classes respectively, in that means are provided for sending values $f_{i,j}(X)$ to the inputs of the module, such that

$$f_{i,j}(X) = \log(P_{i,j}(X)) - \log(1 - P_{i,j}(X))$$

the processing module (3) comprising circuits (30) establishing linear combinations of its inputs and circuits (31) performing a non-linear normalization function from the linear combinations obtained, this normalization function supplying N outputs, the sum of which is constant and which can each be interpreted as being a probability of belonging to one respective class among N.

2. Neural system according to Claim 1, characterized in that the linear combinations are of the form $g_i(X) = g_j(X) + f_{i,j}(X)$, where $g_i(X)$ is a linear combination of index i, $g_j(X)$ is another linear combination of index j.

3. Neural system according to Claim 2, characterized in that one of the functions $g_j(X)$ is a constant, the others being deduced from the functions $f_{i,j}(X)$ by the formula $g_i(X) = g_j(X) + f_{i,j}(X)$.

4. Neural system according to one of Claims 2 and 3, characterized in that the non-linear normalization function at the output of the processing module is of the form:

$P_i(X) = e^{g_i(X)}/[\text{sum of the } e^{g_i(X)}, \text{ for } i = 1 \text{ to } N]$.

5. System according to one of Claims 1 to 4, characterized in that the P networks include output neurons ($N_{i,j}$) each consisting of a circuit carrying out a weighted summing function (SP) followed by a circuit (CS) carrying out a saturating non-linear function, and in that the processing module (3) receives, on its inputs, the outputs of the weighted summing functions.

6. System according to Claim 5, characterized in that the saturating non-linear function of the output neurons of the P networks is a sigmoid function (of the form $e^x/(1+e^x)$).

7. System according to one of the preceding claims, characterized in that the networks are P = N-1 in number.

8. Method of object classification by a neural system including a neural system intended for classifying objects among N classes, this system including P distinct neural networks each capable of supplying a classification result ($P_{i,j}(X)$) among only 2 classes, this result being able to be interpreted as the probability that an object X belongs to the class $C_i$ among two possible classes $C_i$ and $C_j$, the N classes being represented in the P neural networks, and the P neural networks being able to undergo individual respective learning phases, in which a signal processing module (3) is connected to the P neural networks in object-recognition phase after learning, in order to supply, from the results supplied by the P neural networks, N outputs ($P_l(X)$) representing probabilities of belonging to each of the N classes respectively, in that means are provided for sending values $f_{i,j}(X)$ to the inputs of the module, such that

$$f_{i,j}(X) = \log(P_{i,j}(X)) - \log(1 - P_{i,j}(X))$$

the processing module (3) comprising circuits (30) establishing linear combinations of its inputs and circuits (31) performing a non-linear normalization function from the linear combinations obtained, this normalization function supplying N outputs, the sum of which is constant and which can each be interpreted as being a probability of belonging to one respective class among N, characterized in that:

- a learning phase is performed in order to configure each of the P neural networks on the basis of input vectors and desired results of classification into the groups of 2 classes, without using the processing module (3),

- the operational classification phases are performed after learning, by using the processing module (3) in order to obtain the results of classification among N classes from the recognition performed by the P networks.

9. Method according to Claim 8, characterized in that the learning phase for the P networks is followed by a supplementary learning phase for the system, in which the processing module (3) is connected, with a learning base involving desired results of classification among N classes.

FIG.1

Circulation nulle

$f_{14} + f_{43} + f_{31} = 0$

potentiels

FIG.2

FIG.3

$P_1(X)$

$P_2(X)$

$P_3(X)$

$P_N(X)$

$N_{i,j}$

$f_{i,j}(X)$

$P_{i,j}(X)$

X

MODULE DE TRAITEMENT

EP 0 454 535 B1

$g1(X) = K$     $g^1(X)$     $P_1(X)$

$f1,2(X)$     $g_2(X)$     $P_2(X)$

$f1,3(X)$     $g_3(X)$     $P_3(X)$

$P_i(X)$

$f1,N(X)$     $g_N(X)$     $P_N(X)$

30     31

$$P_i(X) = \frac{e^{g_i(X)}}{\sum_{i=1}^{N} e^{g_i(X)}}$$

FIG. 4